# EUROPÄISCHE PATENTSCHRIFT

(11) **EP 1 997 062 B1**
(45) Veröffentlichungstag und Bekanntmachung des Hinweises auf die Patenterteilung: **27.01.2016**
(21) Anmeldenummer: 07711812.3
(22) Anmeldetag: 07.03.2007
(51) Int. Cl.: B42D 15/00

(54) **VERFAHREN ZUR HERSTELLUNG EINES MEHRSCHICHTAUFBAUS SOWIE MEHRSCHICHTAUFBAU FÜR EIN IDENTIFIKATIONSDOKUMENT**
METHOD FOR PRODUCING A MULTILAYER STRUCTURE, AND MULTILAYER STRUCTURE FOR AN IDENTIFICATION DOCUMENT
PROCEDE POUR LA FABRICATION D'UNE STRUCTURE MULTICOUCHE ET STRUCTURE MULTICOUCHE POUR DOCUMENT D'IDENTIFICATION

(30) Priorität: 09.03.2006 DE 102006011388; 09.08.2006 DE 102006037383
(43) Veröffentlichungstag der Anmeldung: 03.12.2008
(60) Teilanmeldung: 14189061.6
(73) Patentinhaber: Bundesdruckerei GmbH, 10969 Berlin (DE)
(72) Erfinder: SEIJO-BOLLIN, Hans-Peter, 10245 Berlin (DE)
(74) Vertreter: Maser, Jochen
(86) Internationale Anmeldenummer: PCT/EP2007/001938
(87) Internationale Veröffentlichungsnummer: WO 2007/101663

(56) Entgegenhaltungen:
- EP-A- 1 529 653
- EP-A- 1 574 359
- WO-A-2005/062244
- DE-A1- 2 417 564
- DE-A1-102004 008 841
- US-A- 4 324 421
- US-A- 4 592 976
- US-A1- 2003 037 875

## Beschreibung

Die Erfindung betrifft ein Verfahren zur Herstellung eines aus mehreren Schichten bestehenden flexiblen Mehrschichtaufbaus sowie einen Mehrschichtaufbau für ein Identifikationsdokument.

Solche Identifikationsdokumente, wie beispielsweise Pässe, buchartige Personalausweise, Führerscheine, vorläufige Personaldokumente, Sicherheitsdokumente, Zugangsberechtigungen oder dergleichen, enthalten persönliche Daten. Deshalb besteht ein erhebliches Interesse daran, solche Identifikationsdokumente vor Fälschungen zu schützen und die Herstellung von Fälschungen technisch unmöglich oder zumindest unrentabel zu machen. Darüber hinaus soll eine leichte Überprüfbarkeit und Kontrollierbarkeit von solchen Identifikationsdokumenten ermöglicht sein.

Aus der EP 1 502 765 A1 ist ein Verfahren zur Herstellung eines Identifikationsdokumentes in Form eines Büchleins bekannt geworden, welches einen Umschlag umfasst, der an einem Rücken wie üblich gefalzt ist und in den mehrere Blätter in bekannter Weise eingebunden sind. Das Büchlein weist eine Datenseite auf, die einen Mehrschichtaufbau mit einem Datenträger und einer flexiblen Schicht aufweist. Der Datenträger umfasst beispielsweise einen Chip und eine Antenne und ist aus einer Kunststofffolie ausgebildet. Die flexible Schicht ist aus einer Kunststofffolie oder einem Gewebe hergestellt. Durch Laminieren des Gewebes auf beiden Seiten der Kunststofffolie wird die Kunststofffolie erweicht, um das Gewebe mit der Oberfläche des Datenträgers zu verbinden.

Die US 2003/037875 offenbart ein Verfahren zur Herstellung eines Mehrschichtaufbaus für ein Identifikationsdokument mit einen substrat aus einer Fareschicht in dar ein Transpondermodul eingebettet ist.

Der Erfindung liegt die Aufgabe zugrunde, ein Verfahren zur Herstellung eines Mehrschichtaufbaus sowie einen Mehrschichtaufbau für ein Identifikationsdokument vorzuschlagen, bei dem die Fälschungssicherheit erhöht wird, eine hohe Beanspruchung im täglichen Gebrauch über einen langen Zeitraum ermöglicht ist und vielseitig in Identifikationsdokumenten einsetzbar ist.

Diese Aufgabe wird erfindungsgemäß durch ein Verfahren gemäß den Merkmalen des Anspruchs 1 gelöst.

Der durch das erfindungsgemäße Verfahren hergestellte Mehrschichtaufbau für ein Identifikationsdokument weist den Vorteil auf, dass ein flexibles Grundmodul oder eine flexible Basis für die Weiterverarbeitung und Komplettierung mit weiteren Schichten geschaffen wird. Die nur teilweise in die Substratschicht einlaminierte Faserschicht ermöglicht, dass eine darauf aufbringbare Klebemittelschicht eine Art Verzahnung oder Verhakung mit der Substratschicht bildet, wobei gleichzeitig eine hinreichende Elastizität gegeben ist, so dass bei einer Biegebeanspruchung die einzelnen Schichten nachgiebig zueinander ausgebildet sind. Hierfür ist eine ein- oder mehrschichtige Substratschicht zumindest im jeweiligen Randbereich aus einem thermoplastisch verarbeitbaren Polymer hergestellt, in den die Faserschicht teilweise einlaminiert wird. Unter thermoplastisch verarbeitbaren Polymer werden thermoplastische Elastomere oder Thermoplaste verstanden. Zu den thermoplastischen Elastomeren, welche bei Temperaturerhöhung strukturell aufbrechen können und beim Abkühlen wieder reversibel vernetzen, wobei sie ein 3D-Netzwerk ausbilden können, gehören vorzugsweise thermoplastisches Polyurethan (TPU) oder Mischungen mit überwiegend TPU. Dagegen sind die Thermoplaste linear und nicht 3D-vernetzt. Zu diesen Thermoplasten gehören beispielsweise PP, PE, PA, PVC, PET und Mischungen daraus. Der über die Substratschicht hinausstehende Teil der Faserschicht oder der jeweiligen Fasern weist eine größere Angriffsfläche für eine Klebemittelschicht als die Seitenfläche der Substratschicht auf, durch welche eine Deckschicht zur Substratschicht fixiert wird. Durch die Verhakung beziehungsweise Verklammerung der einzelnen Fasern einer Faserschicht zwischen den zueinander benachbarten Schichten, also zwischen der Substratschicht und der Klebemittelschicht, wird einerseits eine hohe Flexibilität und andererseits eine hohe Biegewechselfestigkeit erzielt. Durch den gewählten Aufbau werden auch senkrecht zur Schichtebene die Eigenschaften eines Faserverbundwerkstoffs mit sehr hoher Festigkeit erzielt, ohne dass dabei eine Deckschicht mit der Faserschicht verschmilzt oder die Faserschicht in die Deckschicht einlaminiert wird. Die Schichten lassen sich bei Fälschungsversuchen nicht mehr voneinander trennen, ohne sichtbare Beschädigungen, insbesondere an Einbandmaterial und Vorsatz, an einer Personalisierungsdatenseite oder an Einlageblättern zu hinterlassen. Ebenso wird ein Spleißen des Schichtverbundes an den gestanzten Außenkanten des Buchdeckels während des langjährigen Gebrauchs des Dokumentes wirksam verhindert.

Nach einer bevorzugten Ausgestaltung des Verfahrens ist vorgesehen, dass die Faserschicht aus einem Vlies oder strukturiertem Material wie Gewebe, Gewirke oder Gelege, aus cellulosehaltigen Fasern oder einer langfasrigen Cellulose hergestellt ist. Alternativ kann die Faserschicht auch aus einem Vlies auf der Basis von Pflanzenfasern, wie beispielsweise Banane, Kokos oder dergleichen, hergestellt werden. Ebenso können Industriecellulose aus Holz sowie alle weiteren cellulosehaltigen Fasern, wie Hanf, Baumwolle oder dergleichen, eingesetzt werden. Weiterhin können Kunstfasern, wie zum Beispiel PET, PA, PE oder PP oder deren Mischungen, verwendet werden. Des Weiteren können auch Mischungen aus Kunst- und Naturfasern verwendet werden. Solche Fasern weisen eine gute Benetzbarkeit mit der Substratschicht, die bevorzugt aus einem thermoplastischen Polyurethan hergestellt ist, und mit einem Klebemittel auf.

Das Flächengewicht der zumindest teilweise in die Substratschicht eingebetteten Faserschicht kann einen Bereich von 5 bis 40 g/m² umfassen. Besonders geeignet sind Flächengewichte im Bereich von 6 bis 15 g/m².

Die Faserlänge der Fasern, die in die Substratschicht teilweise eingebracht werden oder die Faserschicht oder das Faservlies bilden, beträgt bevorzugt zumindest 2 mm. Es können beispielsweise auch Fasern mit einer Länge von mehreren Zentimetern vorgesehen sein.

Ein flexibler Mehrschichtaufbau wird gemäß einer vorteilhaften Ausgestaltung des Verfahrens dadurch erzielt, dass eine auf einer Faserschicht aufgebrachte Klebemittelschicht die einzelnen hervorstehenden Fasern zumindest umschließt, so dass nach dem Aushärten der Klebemittelschicht ebenfalls ein Einlaminieren der Fasern in der Klebemittelschicht in Analogie zur Substratschicht vorliegt. Des Weiteren kann bevorzugt vorgesehen sein, dass die Klebemittelschicht beim Aufkaschieren auf die Substratschicht bis auf diese durchdringt und zusätzlich an der Substratschicht angreift. Dadurch kann ein besonders stabiler Faserverbund erzielt werden.

Eine vorteilhafte Ausgestaltung des Verfahren sieht vor, dass die Klebemittelschicht auf einer eine chemische Bindung zur Substratschicht und/oder zur Faser aufbauenden Substanz hergestellt ist. Dadurch wird die Haftkraft erhöht. Bevorzugt ist das Klebemittel als wässrige Dispersion von Polyvinylacetat, Vinylacetat Copolymer oder Polyurethanen hergestellt. In Verbindung mit einem reaktiven Härter auf Isocyanatbasis stellt sich eine besonders hohe Haftkraft ein. Des Weiteren können auch wasserfreie (reaktive) Polymethanrezepturen, wie zum Beispiel Zwei-komponenten-Polyurethane und reaktive Hotmelt-Polyurethane, zum Einsatz kommen. Weiterhin ist es denkbar, UV-strahlungshärtende Klebemittel zu verwenden. Die für den flexiblen Mehrschichtaufbau vorgesehenen Klebemittel weisen darüber hinaus den Vorteil auf, dass diese zähelastisch sind und folglich eine Elastizität in den Schichtaufbau einbringen. Gleichzeitig kann vorteilhafterweise in Abhängigkeit der Schichtdicke eine Dämpfung des Mehrschichtaufbaus oder für die zwischen der Klebemittelschichten liegenden Komponenten gegen Stöße von außen vorgesehen sein. Beispielsweise können Vinylacetat- oder Vinylacetat-Copolymer-Dispersionen, vorzugsweise jeweils Härter oder flexible PUR-Systeme enthaltend, als Ein- beziehungsweise Zwei-Komponenten-Systeme oder Hotmelt-Kleber verwendet werden.

Bevorzugt ist vorgesehen, dass die Klebemittelschicht als wärmeaktivierbare reaktive Klebefolie oder Klebemittel, beispielsweise eine wärmeaktivierbare reaktive Polyurethanfolie oder eine Acrylatklebeschicht, ausgebildet ist. Dies weist den Vorteil auf, dass die Schicht separat bereit gestellt und unmittelbar vor dem Einbringen des Mehrschichtaufbaus in ein Identifikationsdokument oder vor dem Aufbringen einer Deckschicht eingelegt werden kann. Somit ist auch ermöglicht, dass unmittelbar vor dem Gebrauch, wie beispielsweise auf einer Behörde, ein sogenannter e-Sticker umfassend elektronische Komponenten, zum Beispiel eine Antenne mit Chip, in Form eines sogenannten Visastickers, in ein Identifikationsdokument eingebracht wird, indem der Mehrschichtaufbau und die Klebemittelschicht nacheinander auf das Einlageblatt des Identifikationselements aufgebracht wird. Bevorzugt ist diese wärmeaktivierbare reaktive Klebefolie auf Polyurethan-Basis oder auf der Basis eines thermoplastischen Schmelzklebers ausgebildet. Ebenfalls bevorzugt wird die Verwendung von drucksensitiven Klebemitteln, wie Acrylatklebern, als Klebemittelschicht bei e-Stickern oder Klebemitteln, welche nur zeitweise aufgebracht werden.

Ein erfindungsgemäßer Mehrschichtaufbau wird in Anspruch 10 definiert.

Der Mehrschichtaufbau weist in der Substratschicht ein Transpondermodul auf, welches in der Substratschicht vollständig eingebettet ist und die Faserschicht sich im Randbereich vollständig über die Substratschicht erstreckt. Dadurch kann eine einfache Herstellung während dem Einlaminieren der Faserschicht ermöglicht werden.

Alternativ kann vorgesehen sein, dass das Transpondermodul an den Randbereich der Substratschicht angrenzt und die Faserschicht an einer Stirnfläche des Transpondermoduls aufgelegt wird. Bei einer Verringerung der Substratschichtdicke kann eine solche Ausführungsform von Vorteil sein, wobei durch die Verbindung der Faserschicht mit dem Transpondermodul die Faserverbundwirkung aufrecht erhalten bleibt.

Nach einer weiteren alternativen Ausgestaltung des Verfahrens ist vorgesehen, dass das Transpondermodul aus der Substratschicht herausragt und in einer Ausstanzung der Faserschicht vorgesehen ist. Dadurch kann eine noch weitere Reduzierung des Schichtdickenaufbaus und Beibehaltung der Verbundwirkung der einzelnen Schichten erzielt werden.

Eine weitere Ausgestaltung des Verfahrens zur Herstellung einer Buchdeckeneinlage sieht vor, dass eine aus einem thermoplastischen Elastomer, insbesondere thermoplastischem Polyurethan, ausgebildete Substratschicht mit jeweils einer im Randbereich der Substratschicht eingebrachten Faserschicht versehen ist und auf einer Seite der Substratschicht eine Klebemittelschicht aufgetragen wird, so dass auf der mit der Klebemittelschicht versehenene Substratschicht das Vorsatz aufkaschiert wird. Das Vorsatz kann aus Papier, einer Folie oder einer Kombination aus einem ein- oder mehrschichtigen Verbund aus einem oder verschiedenen Materialien bestehen, der insbesondere Sicherheitsmerkmale umfasst. Eine solche Buchdeckeneinlage ist als Zwischenprodukt geeignet, um zu einem buchartigen Wertdokument weiterverarbeitet zu werden. Beispielsweise werden in einem nächsten Arbeitsgang Einlageblätter sortiert und der Buchdeckeneinlage zugeordnet. Im Anschluss daran wird eine Naht durch die Buchdeckeneinlage und die Einlageblätter eingebracht. Anschließend wird die Buchdeckeneinlage mit einem Buchdeckeneinband versehen beziehungsweise auf die Buchdeckeneinlage zur Fertigstellung des buchartigen Wertdokumentes der Buchdeckeneinband aufkaschiert.

Alternativ kann vorgesehen sein, dass die Einlageblätter beziehungsweise Inhaltsseiten mit einem Vorsatz vernäht werden. Die Substratschicht, in welcher ein Transpondermodul eingebettet ist, wird mit der Faserschicht auf das Vorsatz aufkaschiert. Anschließend wird auf der gegenüberliegenden Seite der Substratschicht das Einbandmaterial auf die Faserschicht der Substratschicht aufkaschiert.

Erfindungsgemäß ist vorgesehen, dass in der Substratschicht ein Transponder-modul eingebettet ist. Dadurch ist ein hinreichender Schutz des Transpondermoduls gegen äußere Einflüsse gegeben. Zudem ist das Transpondermodul von außen nicht sichtbar und spürbar.

Die Aufbringung des Einbandmaterials weist vorteilhafterweise ebenfalls einen dämpfenden Charakter auf. Hierfür wird bevorzugt ein Einbandmaterial aus einem porösen Material oder wenig verdichteten Material mit langfasriger Cellulose und Latex oder mit latexierter Cellulosefaser mit relativ breiten Lufteinschlüssen eingesetzt. Alternativ oder ergänzend kann auch die Substratschicht aus einem solchen Material hergestellt sein. Die Dämpfung wird insbesondere durch eine Kombination von elastischen Klebern, dessen Schichtdicke und einer Auswahl der Materialien für den Einband erzielt. Zusätzlich kann die Faserschicht in Verbindung mit der Substratschicht dämpfende Eigenschaften aufweisen. Diese neue flexible Konstruktion erlaubt damit auch den Einsatz eines schützenden Einbandmaterials, ohne die Buchdecke zu sehr zu versteifen. Ein Sperrverhalten des Bucheinbandes lässt sich durch den verwendeten heißsiegelfähigen Kleber durch Zusammenklappen des Buches bei Temperaturen größer 80° wesentlich reduzieren.

Durch die vorbeschriebene Ausführungsform ist eine flexible Buchdecke geschaffen, welche eine hohe Biegefähigkeit aufweist, jedoch knickfest ausgebildet ist.

Ein alternatives Verfahren zur Herstellung eines Mehrschichtaufbaus für eine Personalisierungsdatenseite sieht vor, dass eine auf jeder Seite mit einer Faserschicht versehene Substratschicht, die teilweise einlaminiert ist, mit einer Klebemittelschicht versehen wird, so dass auf jeder Seite der Substratschicht eine Deckschicht, insbesondere aus einem temperaturstabilen Kunststoff, wie beispielsweise Polycarbonat, aufkaschiert wird. Solche Personalisierungsdatenseiten können ebenfalls in ein buchartiges Wertdokument, beispielsweise durch Einnähen, integriert werden. Alternativ kann ein solcher Mehrschichtaufbau auch als Ausweiskarte oder dergleichen ausgebildet sein. Hierbei ist ebenfalls vorgesehen, dass die Substratschicht eine elektronische Komponente, zum Beispiel ein Transpondermodul bestehend aus Antenne und Chip, umfasst. Alternativ zur vorbeschriebenen Ausgestaltung der Personalisierungsdatenseite ist auch vorgesehen, dass die Substratschicht auf nur einer Seite im Randbereich eine zum Teil einlaminierte Faserschicht umfasst, welche mit einer Klebemittelschicht versehen wird, um diese Substratschicht mit einer Personalisierungsdatenseite zu versehen. Auf der gegenüberliegenden Seite der Substratschicht, welche nicht mit einer Faserschicht im Randbereich versehen ist, kann ein Sicherheitspapier vorgesehen sein. Ein solches Sicherheitspapier kann ein Papier oder eine Folie umfassen, die Funktionsflächen mit verschiedenen Sicherheitsfunktionen umfasst. Bei beiden Ausführungsformen des Mehrschichtaufbaus kann die Klebemittelschicht auch als Folie unmittelbar vor dem Weiterverarbeiten des Mehrschichtaufbaus zur Personalisierungsdatenseite oder Klebeetikett oder e-Sticker (Klebeetikett mit elektronischer Komponente), beispielsweise als Visasticker, beigestellt und aufgebracht werden oder bereits auf dem Mehrschichtaufbau versehen sein, wobei vor dem Verbinden mit dem Aufbringungsort eine Schutzfolie abgezogen wird.

Zum Verbinden des Klebeetiketts mit dem Sicherheitsdokument, zum Beispiel Passbuch, bei Verwendung eines wärmereaktiven Klebemittels können Passbuch und Klebeetikett in eine Halte- und Pressvorrichtung eingespannt werden, wobei Passbuch und Klebeetikett fixiert werden. Die beheizbare Pressvorrichtung ermöglicht dem wärmeaktivierbaren Klebemittel bei einer Temperatur von zum Beispiel 120 bis 160 °C und beispielsweise 20 bis 60 Sekunden Anpresszeit auszureagieren.

Das erfindungsgemäße Verfahren zur Herstellung eines Mehrschichtaufbaus zur Ausgestaltung eines einseitig klebenden Etiketts sieht vor, dass eine Substratschicht aus thermoplastischem Elastomer, insbesondere TPU, mit zumindest einer am Randbereich teilweise eingebrachten Faserschicht versehen wird, und die mit der Faserschicht versehene Seite der Substratschicht mit einer Klebemittelschicht versehen wird, auf welcher wiederum eine abziehbare Schutzfolie aufgebracht wird oder zur Substratschicht mit der einseitig aufgebrachten Faserschicht im Randbereich eine Klebefolie als Klebemittelschicht zum Aufbringen auf die Faserschicht separat bereit gestellt wird. Dadurch können sogenannte Visasticker oder dergleichen hergestellt werden, die nach dem Einbringen auf einem Einlageblatt oder einem anderen Bestandteil eines Identifikationsdokumentes eine Faserverbundwirkung aufbauen und ermöglichen, dass eine flexible, jedoch langlebige Verbindung zum aufgebrachten Einlageblatt oder dergleichen aufgebaut wird.

Die Aufgabe wird erfindungsgemäß des Weiteren durch einen Mehrschichtaufbau für ein Identifikationsdokument gelöst, welcher einen Schichtaufbau aus einer ein- oder mehrschichtigen Substratschicht aus einem thermoplastischen Polyurethan umfasst, wobei im Randbereich der Substratschicht auf zumindest einer Seite der Substratschicht eine Faserschicht teilweise einlaminiert und ein über die Substratschicht hinausstehender Teil der Faserschicht zur Verankerung in einer Klebemittelschicht vorgesehen ist, damit eine an der Klebemittelschicht anhaftende Deckschicht zur Substratschicht nicht lösbar und flexibel fixiert ist. Durch diese Anordnung wird ermöglicht, dass zwischen der Klebemittelschicht und der Substratschicht nicht nur die Adhäsion an den einander gegenüberliegenden Grenzflächen wirkt, sondern zusätzlich die Faserschicht sowohl in der Substratschicht als auch in Klebemittelschicht einlaminiert und verankert oder verklammert ist. Dadurch kann eine erhöhte Festigkeit bei einer gleichzeitig hohen Flexibilität erzielt werden. Die Klebemittelschicht kann wiederum mit einer Deckschicht vollflächig in Verbindung treten, so dass die Klebemittelschicht einen flexiblen Übergang zwischen einer Deckschicht und der Substratschicht mit einer hohen Verbundwirkung ermöglicht. Ein solcher Aufbau ist für eine ein- oder mehrschichtige Personalisierungsdatenseite sowie für eine Buchdecke oder Buchdeckeneinlage als auch für ein einseitig klebendes Etikett für ein Identifikationselement vorgesehen.

Beim erfindungsgemäßen Mehrschichtaufbau wird diese Faserverbundwirkung bevorzugt dadurch erzielt, dass die Klebemittelschicht beim Aufbringen auf die Faserschicht den über den Randbereich hinausstehenden Teil der Faserschicht umschließt und die Klebemittelschicht zumindest teilweise auf die Substratschicht durchdringt. Dabei ist die Klebemittelschicht in der Auftragsdicke und der Materialzusammensetzung auf die Faserschicht angepasst, so dass hohe Festigkeiten durch ein solches Eindringverhalten der Klebemittelschicht in die Faserschicht ermöglicht ist. Die Klebemittelschicht wird bevorzugt aus einem zähelastischen und vorzugsweise gut stoßdämpfenden Klebemittel gebildet. Beispielsweise können Jowacoll 780.00 oder Planatol AD 9823, jeweils mit Härter oder flexiblen PUR-Systemen als Zwei-Komponenten-System oder Hotmelt-Kleber, verwendet werden.

Nach einer vorteilhaften Ausgestaltung der mehrschichtigen Buchdecke oder Personalisierungsdatenseite ist die Substratschicht aus einer einzigen Schicht insbesondere einem thermoplastischen Polyurethan, hergestellt. Wieder ist in dieser Schicht ein Transpondermodul eingebettet. Alternativ kann vorgesehen sein, dass das Transpondermodul an den Randbereich angrenzt und von der Faserschicht überdeckt wird oder teilweise in die Faserschicht hineinragt. Des Weiteren kann alternativ vorgesehen sein, dass die Faserschicht eine Ausstanzung in dem Bereich hat, in welchem das Transpondermodul gegenüber dem Randbereich der Substratschicht hervorsteht.

Zur Ausgestaltung einer Buchdecke ist vorteilhafterweise vorgesehen, dass eine Deckschicht als Vorsatz und eine gegenüberliegende Deckschicht als Buchdeckeneinband vorgesehen ist. Zur Ausgestaltung einer solchen Buchdecke besteht zumindest eine Schicht aus einem wenig verdichteten Material aus beispielsweise latexierter Cellulosefaser mit relativ viel Lufteinschlüssen zur optimalen Dämpfung. Beispielsweise können Materialien wie Skivertex 12 pt oder Skivertex Ultra eingesetzt werden. Bei der Verwendung des Mehrschichtaufbaus als Personalisierungsdatenseite sind bevorzugt beide Deckschichten aus einem temperaturbeständigen Kunststoff, wie beispielsweise Polycarbonat, hergestellt.

Die Erfindung sowie weitere vorteilhafte Ausführungsformen und Weiterbildungen derselben werden im Folgenden anhand der in der Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematisch vergrößerte Darstellung eines erfindungsgemäßen Mehrschichtaufbaus mit einer Substratschicht und einer zum Teil einlaminierten Faserschicht,
- Figur 2: eine schematische Darstellung eines erfindungsgemäßen Mehrschichtaufbaus für eine Buchdecke,
- Figur 3: eine alternative Ausgestaltung eines erfindungsgemäßen Mehrschichtaufbaus für eine Buchdecke zu Figur 2,
- Figur 4: eine schematische Schnittdarstellung eines erfindungsgemäßen Mehrschichtaufbaus für eine Personalisierungsdatenseite oder eines Etikettes für ein Einlageblatt und
- Figur 5: eine alternative Ausgestaltung zur Herstellung eines Mehrschichtaufbaus gemäß Figur 4.

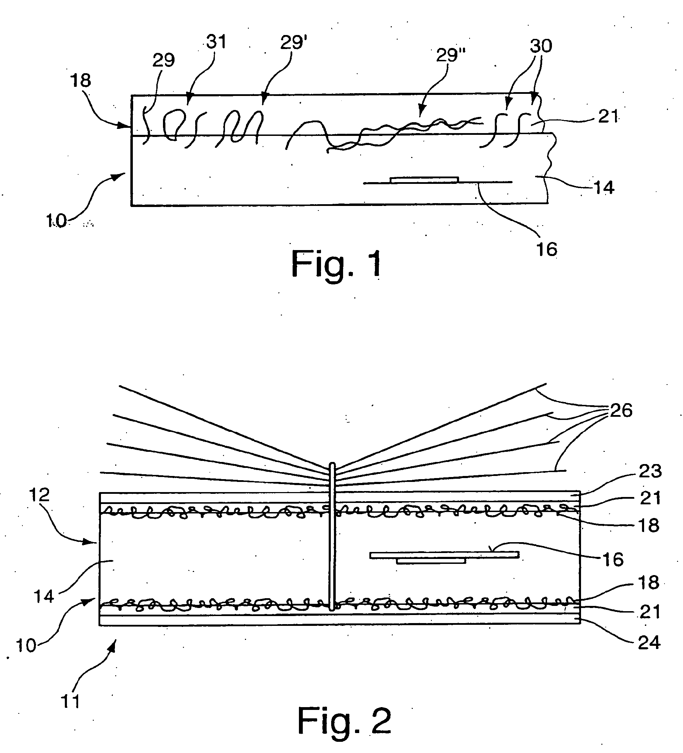

In Figur 1 ist ein erfindungsgemäßer Mehrschichtaufbau 10 für ein Identifikationsdokument 11, wie beispielsweise einen Reisepass oder dergleichen, dargestellt. Der Mehrschichtaufbau 10 umfasst eine Substratschicht 14. Diese Substratschicht 14 ist aus einem thermoplastisch verarbeitbaren Polymer hergestellt. Diese weist beispielsweise eine Schichtdicke zwischen 50 bis 500 µm auf. In der Substratschicht 14 ist ein Transpondermodul 16 eingebettet. Die Substratschicht 14 weist im Randbereich auf einer Ober- oder Unterseite eine Faserschicht 18 auf. Diese Faserschicht 18 besteht beispielsweise aus einzelnen Fasern, die teilweise in die Substratschicht 14 einlaminiert sind. Ein Teil der Fasern steht gegenüber der Substratschicht 14 hervor. Die Faserschicht 18 kann als eine Anhäufung von einer Vielzahl von Einzelfasern ausgebildet sein. Ebenso kann ein Vlies oder Spinnvlies vorgesehen sein, welches teilweise einlaminiert ist. Dabei ist vorgesehen, dass die einzelnen Fasern auf der der Substratschicht 14 zugewandten Seite in diese eindringen beziehungsweise beim Herstellen teilweise einlaminiert sind und auf der anderen Seite eine gute Benetzbarkeit mit einem darauf aufbringbaren Klebemittel zur Ausbildung einer Klebemittelschicht 21 ermöglichen. Die Faserschicht 18 kann verschiedene oder gleiche Anordnungen und Ausgestaltungen der einzelnen Fasern 29 umfassen. Beispielsweise kann die Faserschicht 18 aus einzelnen Fasern 29 ausgebildet sein, die mit einem Ende in die Substratschicht 14 eingebettet oder darin verhakt sind und das freie Ende frei hervorsteht. Das freie Ende kann auch als Haken 30 oder als eine geschlossene Schlaufe 31 ausgebildet sein. Ebenso können Fasern 29 an längeren freien Enden vorgesehen sein, die wirr übereinander liegen oder zueinander angeordnet sind, bevor die Klebemittelschicht aufgetragen wird. Des Weiteren können Fasern 29 schlangenlinienförmig ausgebildet sein, wobei abwechselnd Abschnitte in- und außerhalb der Substratschicht liegen können. Durch diesen Mehrschichtaufbau 10 kann nach dem Aufbringen einer Klebemittelschicht 21 zur Aufnahme von weiteren Schichten, wie nachfolgend noch beschrieben sein wird, ermöglicht sein, dass sowohl die Klebemittelschicht 21 als auch die Substratschicht 14 im Wesentlichen im gleichen Maße durch die Fasern zueinander verankert werden, so dass neben der reinen Adhäsion der aneinander grenzenden Flächen ein zusätzlicher Verankerungseffekt erzielt wird. Dadurch wird die Faserverbundwirkung erhöht. Gleichzeitig kann die Flexibilität eines solchen Mehrschichtaufbaus 10 erhöht werden.

Eine besonders vorteilhafte Verbindung wird erzielt, wenn die Klebemittelschicht 21 eine chemische Bindung zur Substratschicht 14 und/oder Faserschicht 18 beziehungsweise Vliesschicht aufbaut.

Die vorbeschriebenen Ausführungsformen ermöglichen zusammen mit der Klebemittelschicht 21 einen flexiblen und nicht lösbaren Verbund.

In Figur 2 ist eine schematische Schnittdarstellung eines erfindungsgemäßen Mehrschichtaufbaus 10 zur Ausbildung einer flexiblen Buchdecke 12 für ein Passbuch dargestellt. Bei dieser Ausführungsform umfasst der Mehrschichtaufbau 10 auf jeder Seite der Substratschicht 14 eine Faserschicht 18, um eine Faserverbundwirkung zum Vorsatz 23 und Einbandmaterial 24 zu bilden.

Bevor das Einbandmaterial 24 auf die freie Faserschicht 18 der Substratschicht 14 aufkaschiert wird, werden Einlageblätter 26 beziehungsweise Datenseiten 26 und gegebenenfalls eine Personalisierungsdatenseite mit einer Buchdeckeneinlage vernäht. Diese Buchdeckeneinlage besteht beispielsweise aus der Substratschicht 14 und das Vorsatz 23. Das Vorsatz 23 und/oder die Substratschicht 14 können bevorzugt mit mehreren Einlageblättern 26 und gegebenenfalls einer Personalisierungsdatenseite vernäht sein. Nach dem Einnähen der Datenseiten wird ein Buchdeckeeinbandmaterial 24 aufkaschiert, der insbesondere einen Randbereich des Vorsatzes 23 übergreift. Das Vorsatz kann aus Papier, einer Folie oder einer Kombination eines ein- oder mehrschichtigen Verbundes oder aus einem oder mehreren Materialien bestehen.

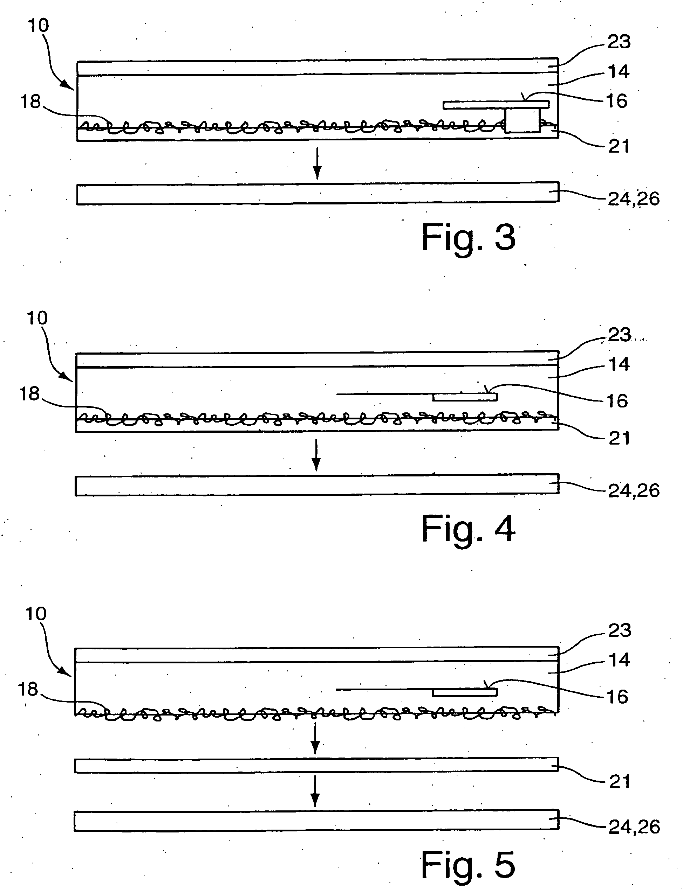

In Figur 3 ist eine alternative Ausführungsform eines erfindungsgemäßen Mehrschichtaufbaus 10 für eine flexible Buchdecke 12 oder eine Personalisierungsdatenseite oder einen e-Sticker als Visasticker dargestellt. Bei dieser Ausführungsform ist die Faserschicht 18 nur einseitig in die Substratschicht 14 eingebracht. Auf der gegenüberliegenden Seite der Substratschicht 14 ist beispielsweise ein Sicherheitspapier oder das Vorsatz 23 unmittelbar auf die Substratschicht 14 aufgebracht. Bei dieser Ausführungsform ragt das Transpondermodul 16 über die Substratschicht 14 hinaus, kann aber auch mit der Schicht 14 abschließen oder hinter ihr zurückbleiben (nicht gezeigt). Die Faserschicht 18 ist dabei derart, ausgestaltet, dass diese eine Ausstanzung für das Transpondermodul aufweist, so dass eine Klebemittelschicht 21 unmittelbar an dem Transpondermodul 16 angreift. Alternativ kann vorgesehen sein, dass das Transpondermodul 16 bis in den Randbereich der Substratschicht 14 sich erstreckt und von der Faserschicht 18 überdeckt wird. Nach dem Aufbringen der Klebemittelschicht 21 wird das Einbandmaterial 24 aufgebracht, um die Buchdecke 12 fertigzustellen oder ein oder mehrere Einlageblätter 26 aufgebracht, um eine Personalisierungsdatenseite oder einen e-Sticker fertigzustellen.

Diese Ausführungsform gemäß Figur 3 kann auch dahingehend abgewandelt werden, dass eine Faserschicht 18 nur zwischen dem Vorsatz 23 und der Substratschicht 14 vorgesehen ist.

In Figur 4 ist eine schematische Schnittdarstellung eines erfindungsgemäßen Mehrschichtäufbaus 10 als Personalisierungsdatenseite oder als Visasticker dargestellt. Der Mehrschichtaufbau 10 gemäß Figur 1 wird auf eine Personalisierungsdatenseite aufgeklebt und mit dieser verbunden. Dieser Verbund kann zusätzlich noch mit einer Deckschicht versehen sein, die aus einem vorzugsweise temperaturbeständigem Material besteht, die Personalisierungsdatenseite bevorzugt vollständig umschließt und gegebenenfalls noch einen Überstand zum Einnähen oder Befestigen in einem Passbuch aufweist. Alternativ oder zusätzlich kann auch ein Einlageblatt 26 als Deckschicht aufgebracht werden. Die vorbeschriebenen Varianten bezüglich der Anordnung und Anzahl der Faserschichten 18 als auch des Transpondermoduls 16 in und zur Substratschicht 14 gelten auch für die vorliegende Ausführungsform. Bei dieser Ausführungsform ist beispielsweise vorgesehen, dass die Klebemittelschicht 21 zunächst auf das Faservlies aufgebracht wird, bevor die Personalisierungsdatenseite aufkaschiert wird.

Eine alternative Verfahrensweise zur Herstellung einer solchen Personalisierungsdatenseite ist in Figur 5 dargestellt. Die Klebemittelschicht 21 kann als separate Klebefolie bereitgestellt werden. Somit können manuelle Einzelanfertigungen ermöglicht werden. Dies ist besonders vorteilhaft bei der Herstellung von sogenannten Visastickern beziehungsweise einseitigen Klebeetiketten. Diese alternative Ausführungsform gilt ebenso für die Ausführungsform gemäß den Figuren 2 und 3.

Der erfindungsgemäße Mehrschichtaufbau 10 ermöglicht somit den Einsatz für eine Buchdeckeneinlage, einen Bucheinband für eine Personalisierungsdatenseite als auch ein Klebeetikett zum Einbringen in oder auf ein Identifikationsdokument.

Alle vorbeschriebenen Merkmale sind jeweils für sich erfindungswesentlich und können beliebig miteinander kombiniert werden.

## Patentansprüche

1. Verfahren zur Herstellung eines Mehrschichtaufbaus (10) für ein Identifikationsdokument (11), bestehend aus einer ein- oder mehrschichtigen Substratschicht (14), in welcher ein Transpondermodul (16) vollständig eingebettet ist, und aus zumindest einer weiteren Schicht, die auf einer oder beiden Seiten der Substratschicht (14) vorgesehenen ist, **dadurch gekennzeichnet,**
- **dass** die Substratschicht (14) jeweils zumindest im äußeren Randbereich aus einem thermoplastisch verarbeitbaren Polymer hergestellt wird und
- **dass** in dem zumindest einem Randbereich der Substratschicht (14) auf der Ober- und/oder Unterseite der Substratschicht (14) eine Faserschicht (18) teilweise einlaminiert wird, so
- **dass** ein Teil der Faserschicht (18) in der Substratschicht (14) einlaminiert und fest in dem Randbereich der Substratschicht (14) verbunden wird und ein gegenüber der Substratschicht (14) hervorstehender Teil der Faserschicht (18) ausgebildet wird und
- **dass** auf dem Teil der Faserschicht (18), der gegenüber der Substratschicht (14) hervorsteht oder auf die Substratschicht (14) und Faserschicht (18) eine Klebemittelschicht (21) aufgebracht wird, so dass eine auf die Klebemittelschicht (21) aufgebrachte Deckschicht (23, 24, 26) nicht lösbar und flexibel zur Substratschicht (14) fixiert wird.

2. Verfahren nach Anspruch 1, **dadurch gekennzeichnet, dass** die Faserschicht (18) aus einem Vlies, Gewebe, Gewirke oder Gelege, aus cellulosehaltigen Fasern oder langfasrigen Cellulose, aus Pflanzenfasern, Industriecellulose oder aus Kunstfasern, insbesondere Polyester oder Polyamid, hergestellt wird.

3. Verfahren nach einem der vorhergehenden Ansprüche, **dadurch gekennzeichnet, dass** die Faserschicht (18) ein Flächengewicht von 5 bis 40 g/m², insbesondere 6 bis 15 g/m², aufweist und vorzugsweise die Faserschicht (18) aus einzelnen Fasern hergestellt wird, deren Faserlänge größer als 2 mm ist.

4. Verfahren nach Anspruch 1, **dadurch gekennzeichnet, dass** die Klebemittelschicht (21) aus einer chemischen Bindung zur Substratschicht (14) und/oder Faser aufbauenden Substanz, insbesondere einer wässrigen Dispersion von Polyvinylacetat, Vinylacetat Copolymer, Polyurethanen oder UV-strahlungshärtendes Klebemittel mit einem reaktiven Härter auf Isocyanatbasis oder einer wasserfreien (reaktiven) Polyurethanzubereitung, hergestellt wird oder dass als Klebemittelschicht (21) eine wärmeaktivierbare reaktive Folie, beispielsweise eine wärmeaktivierbare reaktive Polyurethanfolie oder eine Acrylatklebeschicht, eingesetzt wird.

5. Verfahren nach Anspruch 1, **dadurch gekennzeichnet, dass** der freie Teil der Faserschicht (18) beim Aufbringen der Klebemittelschicht (21) umschlossen wird und die die Faserschicht (18) aufnehmende Fläche der Substratschicht (14) zumindest teilweise mit der Klebemittelschicht (21) benetzt wird.

6. Verfahren nach Anspruch 1, **dadurch gekennzeichnet, dass** in der Substratschicht (14) der Transpondermodul (16) eingebettet wird und die Faserschicht (18) getrennt vom Transpondermodul (16) auf einer Seite der Substratschicht (14) in den Randbereich der Substratschicht (14) eingebracht wird oder dass das Transpondermodul an den Randbereich der Substratschicht angrenzt und die Faserschicht (18) in den Randbereich der Substratschicht (14) eingebracht und auf eine Stirnfläche des Transpondermoduls (16) aufgelegt wird oder dass das Transpondermodul (16) gegenüber dem Randbereich der Substratschicht (14) herausragt und die Faserschicht (18) in den Randbereich der Substratschicht (14) eingebracht und bezüglich dem aus der Substratschicht (14) hinausstehenden Teil des Transpondermoduls (16) ausgestanzt wird.

7. Verfahren nach einem der vorhergehenden Ansprüche, **dadurch gekennzeichnet, dass** zur Herstellung einer Buchdeckeneinlage (12) oder einer Buchdecke zumindest eine Seite der Substratschicht (18) mit einer Klebemittelschicht (21) versehen wird und auf die Klebemittelschicht (21) das Vorsatz (23) oder das Einbandmaterial aufkaschiert wird.

8. Verfahren nach einem der Ansprüche 1 bis 6, **dadurch gekennzeichnet, dass** zur Herstellung einer Personalisierungsdatenseite jede Seite der Substratschicht (14) mit einer Klebemittelschicht (21) versehen wird und auf jeder mit der Klebemittelschicht (21) versehenen Seite eine Deckschicht aus einem temperaturstabilen Kunststoff aufkaschiert wird.

9. Verfahren nach einem der Ansprüche 1 bis 6, **dadurch gekennzeichnet, dass** zur Herstellung eines Etiketts, welches einseitig klebend ausgebildet ist, auf die mit der Faserschicht (18) versehenen Seite der Substratschicht (12) eine Klebernittelschlcht (21) und auf die Klebemittelschicht (21) eine abziehbare Schutzfolie aufgebracht wird oder eine als Klebefolie ausgebildete Klebemittelschicht (21) zum Aufbringen auf die Substratschicht (12) vorgesehen wird.

10. Mehrschichtaufbau (10) für ein Identifikationsdokument (11) bestehend aus einer ein- oder mehrschichtigen Substratschicht (14), in welcher ein Transpondermodul vollständig eingebettet ist, die auf einer oder beiden Seiten der Substratschicht (14) zumindest eine weitere Schicht aufweist, **dadurch gekennzeichnet, dass** die Substratschicht (14) zumindest im Randbereich aus einem thermoplastisch verarbeitbaren Polymer hergestellt ist und zumindest auf einer Seite der Substratschicht (14) eine Faserschicht (18) aufweist, die teilweise in dem Randbereich der Substratschicht (14) auf einer Ober- und/oder Unterseite der Substratschicht (14) einlaminiert ist und eine Klebemittelschicht (21) aufgebracht ist, in welcher ein über die Substratschicht (14) hinausstehender Teil der Faserschicht (18) zur Verankerung einlaminiert ist und mit einer an der Klebemittelschicht (21) anhaftenden Deckschicht (23, 24, 26), die zur Substratschicht (14) nicht lösbar und flexibel fixiert ist.

11. Mehrschichtaufbau nach Anspruch 10, **dadurch gekennzeichnet, dass** die Substratschicht (14) aus einer einzigen Schicht, insbesondere aus thermoplastischem Polyurethan (TPU), hergestellt ist.

12. Mehrschichtaufbau nach Anspruch 10, **dadurch gekennzeichnet, dass** das Transpondermodul (16) in die Substratschicht (14) eingebettet ist, mit der Substratschicht (14) abschließt oder aus ihr herausragt und von der Faserschicht (18) überdeckt ist oder zu einer Ausstanzung der Faserschicht (18) angeordnet ist.

13. Mehrschichtaufbau nach einem der Ansprüche 10 bis 12, **dadurch gekennzeichnet, dass** zur Ausbildung als Buchdeckeneinlage eine Deckschicht das Vorsatz (23) bildet oder dass zur Ausbildung als einseitig klebendes Etiketts auf einer mit der Klebemittelschicht (21) versehenen Seite der Substratschicht (14) eine abziehbare Schutzfolie vorgesehen ist.

14. Mehrschichtaufbau nach einem der Ansprüche 10 bis 13, **dadurch gekennzeichnet, dass** zur Ausbildung als Personalisierungsdatenseite auf beiden Seiten der Substratschicht (14) eine Deckschicht (23, 24, 26) mit einer Klebemittelschicht (21), die den freien Teil der Faserschicht (18) zumindest umschließt, zur Substratschicht (14) fixiert ist.

15. Mehrschichtaufbau nach Anspruch 14, **dadurch gekennzeichnet, dass** eine der Deckschichten (23, 24, 26) aus einem temperaturstabilen Kunststoff, insbesondere Polycarbonat, ausgebildet ist oder dass eine der beiden Deckschichten (23, 24, 26) aus einem Sicherheitspapier hergestellt ist.

16. Mehrschichtaufbau nach einem der Ansprüche 10 bis 15, **dadurch gekennzeichnet, dass** als thermoplastisch verarbeitbares Polymer thermoplastische Elastomere, vorzugsweise thermoplastisches Polyurethan (TPU) oder Mischungen mit überwiegendem Bestandteil an thermoplastischem Polyurethan (TPU), oder Thermoplaste, vorzugsweise Polypropylen, Polyethylen, Polyamid, Polyvinylchlorid, Polyethylentherephthalat oder Mischungen davon, vorgesehen sind.

## Claims

1. A method for producing a multilayer structure (10) for an identification document (11), consisting of a one-layered or multi-layered substrate layer (14) into which a transponder module (16) is entirely embedded, and of at least one further layer which is provided on one side or on both sides of the substrate layer (14), **characterised in that**
- the substrate layer (14), at least in its outer edge region, is made of a polymer capable of being processed by thermoplastic methods, and
- in the at least one edge region of the substrate layer (14) a fibrous layer (18) is partially laminated into the upper side and/or the lower side of the substrate layer (14), such that
- part of the fibrous layer (18) is laminated into the substrate layer (14) and is firmly connected in the edge region of the substrate layer (14) and a portion of the fibrous layer (18) protruding with respect to the substrate layer (14) is formed, and
- on the part of the fibrous layer (18) that protrudes with respect to the substrate layer (14) or on the substrate layer (14) and fibrous layer (18), an adhesive layer (21) is applied, such that a covering layer (23, 24, 26) applied onto the adhesive layer (21) is fixed with respect to the substrate layer (14) in a non-detachable and flexible manner.

2. The method as claimed in claim 1, **characterised in that** the fibrous layer (18) is made of a non-woven fabric, a woven fabric, a knitted fabric or a scrim of cellulose-containing fibres or of long-fibre cellulose, of plant fibres or synthetic fibres, in particular polyester or polyamide.

3. The method as claimed in any of the preceding claims, **characterised in that** the fibrous layer (18) has a basis weight of between 5 and 40 g/m², in particular between 6 and 15 g/m², and **in that** the fibrous layer (18) is preferably made of individual fibres the fibre lengths of which are superior to 2 mm.

4. The method as claimed in claim 1, **characterised in that** the adhesive layer (21) is made from a chemical bond with respect to the substrate layer (14) and/or the fibre-forming substance, in particular an aqueous dispersion of polyvinyl acetate, vinyl acetate copolymer, polyurethanes or UV radiation-curing adhesive with an isocyanatebased, reactive hardener or an anhydrous (reactive) polyurethane preparation, or **in that** a heat-activatable, reactive film, for example a heat-activatable, reactive polyurethane film or an acrylate bonding layer, is used as an adhesive layer (21).

5. The method as claimed in claim 1, **characterised in that** the free part of the fibrous layer (18) is enclosed when the adhesive layer (21) is applied and **in that** the surface of the substrate layer (14) which receives the fibrous layer (18) is at least partially wetted by the adhesive layer (21).

6. The method as claimed in claim 1, **characterised in that** the substrate layer (14) has the transponder module (16) embedded therein and **in that** the fibrous layer (18) is applied separately from the transponder module (16) onto one side of the substrate layer (14) in the edge region of the substrate layer (14) or **in that** the transponder module adjoins the edge region of the substrate layer and the fibrous layer (18) is inserted into the edge region of the substrate layer (14) and placed over an end face of the transponder module (16) or **in that** the transponder module (16) protrudes with respect to the edge region of the substrate layer (14) and the fibrous layer (18) is inserted in the edge region of the substrate layer (14) and cut out with respect to the part of the transponder module (16) protruding from the substrate layer (14).

7. The method as claimed in any of the preceding claims, **characterised in that** for fabricating a case insert (12) or a case at least one side of the substrate layer (18) is provided with an adhesive layer (21) and the end paper (23) or the cover material is laminated onto the adhesive layer (21).

8. The method as claimed in any one of claims 1 to 6, **characterised in that** for fabricating a personalisation data page each side of the substrate layer (14) is provided with an adhesive layer (21) and a covering layer made of a thermally stable plastic material is laminated onto each of the sides provided with the adhesive layer (21).

9. The method as claimed in any one of claims 1 to 6, **characterised in that** for fabricating a label which is realised to be adhesive on one side, the side of the substrate layer (12) that is provided with an fibrous layer (18) has an adhesive layer (21) applied thereon and said adhesive layer (21) has a peelable protective film applied thereon, or in that an adhesive layer (21) realised in the form of an adhesive film is provided for application onto the substrate layer (12).

10. A multilayer structure (10) for an identification document (11) consisting of a one-layered or multi-layered substrate layer (14) into which a transponder module is entirely embedded and which on one side or on both sides thereof has at least one further layer, **characterised in that** the substrate layer (14), at least in its edge region, is made of a polymer capable of being processed by thermoplastic methods and is provided, at least on one side of the substrate layer (14), with a fibrous layer (18) which is partially laminated into the edge region of the substrate layer (14) on an upper side and/or a lower side of the substrate layer (14), and **in that** an adhesive layer (21) is applied into which a part of the fibrous layer (18) protruding from the substrate layer (14) is laminated for anchoring purposes and is fixed, by means of a covering layer (23, 24, 26) adhering to the adhesive layer (21), with respect to the substrate layer (14) in a non-detachable and flexible manner.

11. The multilayer structure as claimed in claim 10, **characterised in that** the substrate layer (14) is fabricated of a single layer, in particular made of thermoplastic polyurethane (TPU).

12. The multilayer structure as claimed in claim 10, **characterised in that** the transponder module (16) is embedded into the substrate layer (14), is flush with the substrate layer (14) or protrudes therefrom and is covered by the fibrous layer (18) or is arranged with respect to a cutout of the fibrous layer (18).

13. The multilayer structure as claimed in any one of claims 10 to 12, **characterised in that** for the realisation of a case insert, a covering layer forms the end paper (23), or for the realisation of a label adhesive on one side, a peelable protective film is provided on a side of the substrate layer (14) that has the adhesive layer (21) applied thereon.

14. The multilayer structure as claimed in any one of claims 10 to 13, **characterised in that** for the realisation of a personalisation data page, a covering layer (23, 24, 26) is fixed with respect to the substrate layer (14) by means of an adhesive layer (21) surrounding at least the free part of the fibrous layer (18).

15. The multilayer structure as claimed in claim 14, **characterised in that** one of the covering layers (23, 24, 26) is formed of a thermally stable plastic material, in particular polycarbonate, or in that one of the two covering layers (23, 24, 26) is made of a security paper.

16. The multilayer structure as claimed in any one of claims 10 to 15, **characterised in that** the polymer capable of being processed by thermoplastic means is intended to include thermoplastic elastomers, preferably thermoplastic polyurethane (TPU), or thermoplastics, preferably polypropylene, polyethylene, polyamide, polyvinyl chloride, polyethylene terephthalate or mixtures thereof.

## Revendications

1. Procédé destiné à fabriquer une structure multicouche (10) pour un document d'identification (11) laquelle est composée d'une couche de substrat (14) monocouche ou multicouche dans laquelle est entièrement noyé un module transpondeur (16) et d'au moins une autre couche qui est prévue sur une face ou les deux faces de la couche de substrat (14), **caractérisé en ce que**
- la couche de substrat (14) est respectivement réalisée, au moins dans la zone périphérique extérieure, en un polymère usinable de manière thermoplastique et
- dans ladite au moins une zone périphérique de la couche de substrat (14), une couche de fibres (18) est partiellement laminée sur la face supérieure et/ou la face inférieure de la couche de substrat (14) de sorte que
- une partie de la couche de fibres (18) est laminée dans la couche de substrat (14) et est reliée de manière fixe dans la zone périphérique de la couche de substrat (14), formant ainsi une partie de la couche de fibres (18) en saillie par rapport à la couche de substrat (14) et
- sur la partie de la couche de fibres (18) qui est en saillie par rapport à la couche de substrat (14) ou sur la couche de substrat (14) et la couche de fibres (18) est appliquée une couche de substance adhésive (21) de sorte qu'une couche de recouvrement (23, 24, 26) appliquée sur la couche de substance adhésive (21) est fixée de manière indétachable et flexible par rapport à la couche de substrat (14).

2. Procédé selon la revendication 1, **caractérisé en ce que** la couche de fibres (18) est réalisée en un non-tissé, un tissu, un maillage ou une nappe en fibres cellulosiques ou en cellulose à fibres longues, en fibres végétales, en cellulose industrielle ou en fibres synthétiques, en particulier en polyester ou en polyamide.

3. Procédé selon l'une quelconque des revendications précédentes, **caractérisé en ce que** la couche de fibres (18) présente une masse surfacique comprise entre 5 et 40 g/m², en particulier entre 6 et 15 g/m² et **en ce que**, de préférence, la couche de fibres (18) est réalisée en fibres individuelles dont la longueur est supérieure à 2 mm.

4. Procédé selon la revendication 1, **caractérisé en ce que** la couche de substance adhésive (21) est réalisée par une liaison chimique par rapport à la couche de substrat (14) et/ou à la substance formant des fibres, en particulier une dispersion aqueuse de polyacétate de vinyle, de copolymère d'acétate de vinyle, de polyuréthanes ou de substance adhésive durcissant au rayonnement ultraviolet avec un durcisseur réactif à base d'isocyanate ou avec une préparation à base de polyuréthane anhydre (réactive), ou **en ce qu'**une feuille réactive thermo-activable telle qu'une feuille de polyuréthane réactive thermo-activable ou une couche de collage à base d'acrylate est utilisée comme couche de substance adhésive (21).

5. Procédé selon la revendication 1, **caractérisé en ce que** la partie libre de la couche de fibres (18) est enveloppée lors de l'application de la couche de substance adhésive (21) et que la surface de la couche de substrat (14) recevant la couche de fibres (18) est au moins partiellement mouillée par la couche de substance adhésive (21).

6. Procédé selon la revendication 1, **caractérisé en ce que** le module transpondeur (16) est noyé dans la couche de substrat (14) et que la couche de fibres (18) est insérée de manière séparée du module transpondeur (16) sur une face de la couche de substrat (14) dans la zone périphérique de la couche de substrat (14) ou **en ce que** le module transpondeur est situé de manière contiguë à la zone périphérique de la couche de substrat et que la couche de fibres (18) est insérée dans la zone périphérique de la couche de substrat (14) et est posée sur une face frontale du module transpondeur (16) ou **en ce que** le module transpondeur (16) fait saillie par rapport à la zone périphérique de la couche de substrat (14) et que la couche de fibres (18) est insérée dans la zone périphérique de la couche de substrat (14) et est découpée par rapport à la partie du module transpondeur (16) dépassant de la couche de substrat (14).

7. Procédé selon l'une quelconque des revendications précédentes, **caractérisé en ce que** pour la réalisation d'un papier couverture de livret (12) ou d'une couverture de livret, au moins une face de la couche de substrat (18) est pourvue d'une couche de substance adhésive (21) et que la page de garde (23) ou le matériau de reliure est laminé(e) sur la couche de substance adhésive (21).

8. Procédé selon l'une quelconque des revendications 1 à 6, **caractérisé en ce que** pour la réalisation d'une page de données de personnalisation, chaque face de la couche de substrat (14) est pourvue d'une couche de substance adhésive (21) et que sur chaque face pourvue d'une couche de substance adhésive (21) est laminée une couche de recouvrement réalisée en une matière plastique thermostable.

9. Procédé selon l'une quelconque des revendications 1 à 6, **caractérisé en ce que** pour la fabrication d'une étiquette adhésive sur une face, une couche de substance adhésive (21) est appliquée sur la face de la couche de substrat (12) pourvue de la couche de fibres (18) et un film protecteur pelable est appliqué sur la couche de substance adhésive (21) ou qu'une couche de substance adhésive (21) réalisée sous forme de film adhésif est prévue pour être appliquée sur la couche de substrat (12).

10. Structure multicouche (10) pour un document d'identification (11) composée d'une couche de substrat (14) monocouche ou multicouche dans laquelle un module transpondeur est entièrement noyé, laquelle présente sur une face ou sur les deux faces de la couche de substrat (14) au moins une autre couche, **caractérisée en ce que** la couche de substrat (14) est réalisée au moins dans la zone périphérique en un polymère usinable de manière thermoplastique et présente au moins sur une face de la couche de substrat (14) une couche de fibres (18) qui est laminée partiellement dans la zone périphérique de la couche de substrat (14) sur une face supérieure et/ou une face inférieure de la couche de substrat (14), et **en ce qu'**une couche de substance adhésive (21) est appliquée dans laquelle une partie de la couche de fibres (18) dépassant de la couche de substrat (14) est laminée pour l'ancrage, et est fixée, à l'aide d'une couche de recouvrement (23, 24, 26) adhérant à la couche de substance adhésive (21), de manière indétachable et flexible par rapport à la couche de substrat (14).

11. Structure multicouche selon la revendication 10, **caractérisée en ce que** la couche de substrat (14) est réalisée en une seule couche, en particulier en polyuréthane thermoplastique (TPU).

12. Structure multicouche selon la revendication 10, **caractérisée en ce que** le module transpondeur (16) est noyé dans la couche de substrat (14), s'arrête au niveau de la couche de substrat (14) ou dépasse de celle-ci et est recouvert par la couche de fibres (18) ou est disposé par rapport à une découpe de la couche de fibres (18).

13. Structure multicouche selon l'une quelconque des revendications 10 à 12, **caractérisée en ce que** pour la réalisation sous forme de papier couverture de livret, une couche de recouvrement forme la page de garde (23) ou **en ce que** pour la réalisation sous forme d'étiquette adhésive sur une face, un film protecteur pelable est prévu sur une face de la couche de substrat (14) pourvue de la couche de substance adhésive (21).

14. Structure multicouche selon l'une quelconque des revendications 10 à 13, **caractérisée en ce que** pour la réalisation sous forme de page de données de personnalisation, une couche de recouvrement (23, 24, 26) est fixée sur les deux faces de la couche de substrat (14) par rapport à la couche de substrat (14) grâce à une couche de substance adhésive (21) qui enveloppe au moins la partie libre de la couche de fibres (18).

15. Structure multicouche selon la revendication 14, **caractérisée en ce qu'**une des couches de recouvrement (23, 24, 26) est réalisée en une matière plastique thermostable, en particulier en polycarbonate, ou **en ce qu'**une des deux couches de recouvrement (23, 24, 26) est réalisée en un papier de sécurité.

16. Structure multicouche selon l'une quelconque des revendications 10 à 15, **caractérisée en ce qu'**il est prévu comme polymère usinable de manière thermoplastique des élastomères thermoplastiques, de préférence du polyuréthane thermoplastique (TPU) ou des mélanges contenant comme composant prédominant du polyuréthane thermoplastique (TPU), ou des thermoplastiques, de préférence du polypropylène, du polyéthylène, du polyamide, du chlorure de polyvinyle, du polythéréphtalate d'éthylène ou des mélanges de ceux-ci.
